# FASCICULE DE BREVET EUROPEEN

(11) **EP 3 087 328 B1**
(45) Date de publication et mention de la délivrance du brevet: **31.01.2018**
(21) Numéro de dépôt: 14831000.6
(22) Date de dépôt: 22.12.2014
(51) Int. Cl.: F25B 21/00

(54) **APPAREIL THERMIQUE ET SON PROCEDE D'OPTIMISATION D'ECHANGE THERMIQUE**
THERMISCHE VORRICHTUNG UND VERFAHREN ZUR OPTIMIERUNG DES WÄRMEAUSTAUSCHES DAFÜR
THERMAL APPLIANCE AND METHOD FOR OPTIMIZING THE HEAT EXCHANGE THEREOF

(30) Priorité: 23.12.2013 FR 1363454
(43) Date de publication de la demande: 02.11.2016
(73) Titulaire: Cooltech Applications, 67810 Holtzheim (FR)
(72) Inventeur: HITTINGER, Michaël, F-67400 Illkirch Graffenstaden (FR)
(74) Mandataire: Koelbel, Caroline
(86) Numéro de dépôt international: PCT/FR2014/053509
(87) Numéro de publication internationale: WO 2015/097395

(56) Documents cités:
- WO-A1-2013/076571
- US-A1- 2011 192 834
- US-A1- 2012 285 179

## Description

### Domaine technique:

La présente invention concerne un appareil thermique comportant un nombre impair de N circuits primaires fermés comportant chacun au moins deux points de sortie reliés en série à au moins une zone d'échange thermique dans laquelle circule un fluide secondaire, un dispositif de manoeuvre déplaçant un fluide caloporteur appelé fluide primaire dans lesdits circuits primaires selon un cycle alternatif de période T comportant deux phases de déplacement d'une demi-période T/2, lesdites phases correspondant à deux déplacements du fluide primaire engendrant un profil de débit et de volume identiques mais de sens opposés.

Elle a également pour objet un procédé d'optimisation de l'échange thermique d'un appareil thermique comportant un nombre impair de N circuits primaires fermés, comportant chacun au moins deux points de sortie reliés en série à au moins une zone d'échange thermique dans laquelle circule un fluide secondaire, ledit procédé consistant à déplacer un fluide caloporteur appelé fluide primaire dans lesdits circuits primaires selon un cycle alternatif de période T comportant deux phases de déplacement d'une demi-période T/2, lesdites phases correspondant à deux déplacements du fluide primaire engendrant un profil de débit et de volume identiques mais de sens opposés.

### Technique antérieure :

Un appareil thermique doit pouvoir échanger l'énergie thermique qu'il produit avec une application extérieure. Un tel échange est réalisé habituellement par un échangeur thermique conçu de préférence pour réaliser un échange thermique optimal. Dans le cas d'appareils thermiques dont le fluide primaire, c'est-à-dire le fluide caloporteur qui transporte l'énergie thermique produite par l'appareil thermique, est déplacé selon un mouvement alternatif ou alterné de va-et-vient, l'efficacité de l'échange thermique entre le fluide primaire et le fluide de l'application extérieure appelé fluide secondaire est problématique à cause du changement de sens de circulation du fluide primaire. En effet, cette inversion de sens de circulation du fluide primaire entraîne, d'une part, un échange thermique tantôt à contre-courant, tantôt co-courant et, d'autre part, un déplacement non constant et saccadé du fluide primaire dans l'échangeur thermique, et une inversion des températures aux entrées / sorties des circuits primaires, de sorte que l'échange thermique n'est pas optimal.

Au sens de la présente invention, un déplacement alterné ou alternatif du fluide primaire correspond à un déplacement avec un changement de sens de circulation régulier, c'est-à-dire avec des allers retours. Cela est particulièrement le cas dans les appareils thermiques magnétocaloriques dans lesquels le fluide primaire est déplacé selon un mouvement de va-et-vient à travers du matériau magnétocalorique pour y établir un gradient thermique.

La publication WO 2013/076571 A1 divulgue un appareil thermique selon le préambule de la revendication 1 et un procédé d'optimisation de l'échange thermique d'un appareil thermique selon le préambule de la revendication 10.

Ces appareils thermiques exploitent l'effet magnétocalorique (EMC) de certains matériaux, qui consiste en une variation de leur température lorsqu'ils sont soumis à un champ magnétique. Dans de tels appareils, les matériaux magnétocaloriques sont soumis à une succession de phases d'aimantation et de désaimantation et un échange thermique avec un fluide caloporteur primaire est réalisé pour parvenir à une variation de température la plus élargie possible au sein de ces matériaux (gradient de température). Pour ce faire, la circulation du fluide primaire est alternée et ce fluide primaire circule dans des canaux ou des pores traversant le matériau magnétocalorique. Un cycle magnétocalorique comprend deux phases, à savoir une phase de magnétisation ou d'aimantation, et une phase de démagnétisation ou de désaimantation, qui se traduit par une énergie disponible à chaque phase. Ce cycle est répété jusqu'à des fréquences de plusieurs Hertz. Pendant ces phases, le matériau magnétocalorique est parcouru par le fluide primaire qui va, soit se réchauffer au contact du matériau lors d'une phase dite de magnétisation, soit se refroidir au contact du matériau lors d'une phase dite de démagnétisation.

De ce fait, dans les appareils thermiques à flux primaire alterné, l'échange thermique avec le fluide secondaire est fortement dépendant de la fréquence des changements de sens de circulation, ainsi que de la température du fluide primaire. Ce phénomène est amplifié dans les appareils thermiques magnétocaloriques dans lesquels le fluide caloporteur primaire déplacé échange thermiquement soit avec un matériau magnétocalorique ayant subi un échauffement, soit avec un matériau magnétocalorique ayant subi un refroidissement. Etant donné que le fluide primaire effectue des allers retours, il y a des moments d'arrêt du déplacement du fluide primaire dans l'échangeur thermique à chaque changement de sens de circulation. Ces moments d'arrêt ont un impact négatif sur l'efficacité de l'échangeur thermique car le régime permanent de déplacement ne s'établit pas et l'échange thermique dans l'échangeur n'est pas stable, de sorte que l'influence de la température ambiante est augmentée et entraîne des pertes thermiques.

Pour exploiter de manière optimale la puissance d'un appareil thermique, il est donc nécessaire que les caractéristiques d'échanges thermiques entre le circuit primaire et le circuit secondaire soient améliorées, optimisées et les plus constantes possibles. Comme expliqué ci-dessus, la maîtrise des échanges thermiques du circuit primaire d'un appareil thermique avec un circuit secondaire est problématique dans le cadre d'un circuit primaire utilisant un déplacement séquentiel alterné et discontinu du fluide primaire.

### Exposé de l'invention:

La présente invention vise à pallier ces inconvénients en proposant un appareil thermique dans lequel le transfert d'énergie thermique entre le fluide primaire et le fluide secondaire d'une ou de plusieurs applications extérieures est optimisé en limitant la variation du débit du fluide primaire dans la zone d'échange thermique pour réduire autant que possible les temps morts dans l'échangeur thermique.

Dans ce but, l'invention concerne un appareil thermique du genre indiqué en préambule, caractérisé en ce que le dispositif de manoeuvre est agencé pour que le début du cycle du fluide primaire est déphasé de T/2N entre chacun desdits circuits primaires, en ce que l'entrée de ladite zone d'échange est reliée de manière unidirectionnelle à un premier ensemble comportant un premier groupe de points de sortie desdits circuits primaires dont les composantes du débit de fluide primaire sortant sont déphasées entre elles de T/N et en ce que la sortie de la zone d'échange est reliée de manière unidirectionnelle à un second ensemble comportant un second groupe de points de sortie desdits circuits primaires dont les composantes du débit de fluide primaire sortant sont également déphasées entre elles de T/N et sont déphasées de T/2 par rapport aux composantes du débit de fluide primaire sortant des points de sortie dudit premier ensemble, de sorte que la somme des débits de fluide caloporteur du premier ensemble entrant dans ladite zone d'échange est toujours supérieure à zéro.

Une telle mesure permet de s'assurer que du fluide primaire est constamment en mouvement dans l'échangeur thermique et donc de tendre vers un débit de fluide primaire le plus stable possible et donc vers un régime établi optimisant l'échange thermique entre le fluide primaire et le fluide secondaire.

Le premier ensemble de points peut comprendre un des points de sortie de chacun desdits circuits primaires et le second ensemble de points peut comprendre les autres points de sortie.

Pour réaliser la liaison fluidique unidirectionnelle entre un point de sortie et la zone d'échange correspondante, un dispositif de contrôle du type clapet anti-retour ou tout autre dispositif analogue réalisant la même fonction, à savoir laissant passer le fluide dans un sens unique, et l'empêchant de circuler dans le sens opposé, tel que par exemple des valves hydrauliques commandées électriquement ou par un différentiel de pression peut être intégré dans le conduit assurant la liaison fluidique. De ce fait, selon le sens de circulation du fluide primaire, pendant une demi-période T/2, du fluide primaire sera susceptible de circuler dans une liaison donnée et pendant l'autre demi-période, il n'y aura pas de déplacement de fluide dans ladite liaison.

Pour réaliser un échange thermique sur toute la période de déplacement du fluide primaire, l'appareil thermique peut également comporter une zone d'échange dont la sortie est reliée de manière unidirectionnelle aux points de sortie du premier ensemble et dont l'entrée est reliée de manière unidirectionnelle aux points de sortie du second ensemble.

Selon une première variante, lesdits circuits primaires peuvent se rejoindre dans un conduit commun dans ladite zone d'échange.

Selon une autre variante, lesdits circuits primaires peuvent être reliés à des conduits distincts dans ladite zone d'échange.

Pour optimiser encore l'efficacité de l'appareil, ladite zone d'échange peut être agencée pour que le fluide primaire et le fluide secondaire se déplacent à contre-courant l'un par rapport à l'autre.

Le dispositif de manoeuvre du fluide primaire dans les circuits primaires peut comporter une came de commande déplaçant des pistons et le profil de ladite came peut être tel qu'il détermine dans chaque circuit primaire un déplacement du fluide caloporteur selon un mouvement périodique de période T.

De préférence, le profil de came peut déterminer les déplacements des pistons de sorte que le fluide primaire est déplacé dans lesdits circuits primaires successivement selon :
i) un débit positif linéairement croissant sur une durée correspondant à T/2N,
ii) puis un débit positif constant sur une durée correspondant à (N-2)T/2N,
iii) puis un débit positif linéairement décroissant sur une durée correspondant à T/2N,
iv) puis un débit négatif linéairement décroissant sur une durée correspondant à T/2N,
v) puis un débit négatif constant sur une durée correspondant à (N-2)T/2N,
vi) puis un débit négatif linéairement croissant sur une durée correspondant à T/2N.

Un tel profil de débit permet d'obtenir un débit constant de fluide primaire dans la zone d'échange.

En outre, un appareil selon l'invention présente une efficacité améliorée au niveau des zones d'échange lorsqu'il comporte un nombre impair de circuits primaires. De préférence, l'appareil peut ainsi comporter trois circuits primaires.

Les circuits primaires de l'appareil thermique selon l'invention peuvent comporter chacun quatre points de sortie reliés deux-à-deux par au moins deux zones d'échange. L'appareil thermique peut comporter quatre points de sortie reliés deux-à-deux par au moins deux zones d'échange.

Le dispositif de manoeuvre du fluide primaire dans les circuits primaires peut comporter au moins une came de commande déplaçant des pistons et la came de commande peut comporter un profil agencé pour déterminer dans chaque circuit primaire un déplacement du fluide primaire selon un mouvement alternatif périodique de période T.

Chaque circuit primaire peut en outre comporter au moins un élément magnétocalorique traversé de part en part par ledit fluide primaire, et ledit appareil thermique peut comporter un arrangement magnétique agencé pour soumettre alternativement ledit élément magnétocalorique à une variation de champ magnétique et créer alternativement dans ledit élément magnétocalorique, une phase d'échauffement et une phase de refroidissement.

L'invention a également pour objet un procédé d'optimisation de l'échange thermique tel que décrit dans le préambule, caractérisé en ce qu'il consiste en outre à déphaser de T/2N le début du cycle du fluide primaire entre chacun desdits circuits primaires, à relier de manière unidirectionnelle l'entrée de ladite zone d'échange à un premier ensemble comportant un premier groupe de points de sortie desdits circuits primaires dont les composantes du débit de fluide primaire sortant sont déphasées entre elles de T/N et à relier de manière unidirectionnelle la sortie de la zone d'échange à un second ensemble comportant un second groupe de points de sortie desdits circuits primaires dont les composantes du débit de fluide primaire sortant sont également déphasées entre elles de T/N et sont déphasées de T/2 par rapport aux composantes du débit de fluide primaire sortant des points de sortie dudit premier ensemble, de sorte que la somme des débits de fluide caloporteur du premier ensemble entrant dans ladite zone d'échange est toujours supérieure à zéro.

Ce procédé peut notamment consister à optimiser l'échange thermique d'un appareil thermique selon l'invention.

### Description sommaire des dessins :

La présente invention et ses avantages apparaîtront mieux dans la description suivante de plusieurs variantes de réalisation données à titre d'exemples non limitatifs, en référence aux dessins annexés, dans lesquels:
- la figure 1 représente trois circuits primaires d'un appareil thermique selon l'invention et une zone d'échange permettant un échange thermique avec un circuit secondaire,
- la figure 2 représente le débit du fluide primaire dans les trois circuits primaires de la figure 1, sur une période T correspondant à 6 secondes,
- la figure 3 représente la composante positive du débit du fluide primaire sortant de trois points de sortie des circuits primaires de la figure 1, sur la période T de 6 secondes,
- la figure 4 représente la composante positive du fluide primaire sortant de trois autres points de sortie des circuits primaires de la figure 1, reliés à la zone d'échange, sur la période T de 6 secondes,
- la figure 5 est un tableau indiquant les composantes positives de débit sortant des différents points sortie sur une période T, ainsi que la somme des débits correspondant pour trois points de sortie,
- la figure 6 est une vue schématique d'un appareil thermique dans lequel la zone d'échange est réalisée selon une variante de l'invention,
- la figure 7 est une vue schématique d'un appareil thermique selon l'invention dans lequel les circuits primaires sont reliés à deux zones d'échange,
- la figure 8 représente schématiquement un circuit primaire d'un appareil thermique selon l'invention, comportant quatre extrémités reliées à deux zones d'échange, et
- la figure 9 représente un appareil thermique réalisé selon la variante illustrée à la figure 1.

### Illustrations de l'invention et différentes manières de la réaliser :

Dans les exemples de réalisation illustrés, les éléments ou parties identiques portent les mêmes références numériques.

L'invention n'est pas limitée à un type particulier d'appareil thermique. Elle se rapporte à tout appareil thermique comportant un fluide caloporteur appelé fluide primaire en déplacement selon un mouvement alterné destiné à transporter de l'énergie thermique produite par l'appareil thermique pour la transférer par un échange thermique à un autre fluide caloporteur appelé fluide secondaire. De préférence, le fluide primaire et le fluide secondaire sont des liquides. De plus, le fluide primaire est de préférence incompressible et le fluide secondaire est de préférence déplacé de manière continue par une pompe ou tout autre dispositif analogue pour refroidir, réchauffer ou tempérer une application extérieure.

Les appareils thermiques 10, 20, 30, 40 représentés comportent un coeur d'appareil référencé G₁₀, G₂₀, G₃₀, G₄₀, comportant au moins trois circuits primaires P_{10,i}, P_{20,i}, P_{30,i}, P_{40,i} dans lesquels un fluide caloporteur dit fluide primaire circule selon un déplacement alternatif ou bidirectionnel. C'est dans le coeur G₁₀, G₂₀, G₃₀, G₄₀ de l'appareil que l'énergie thermique est produite. Le fluide primaire effectue des allers retours successifs dans deux sens opposés de circulation dans le circuit primaire P_{10,i}, P_{20,i}, P_{30,i}, P_{40,i}. Ce déplacement de va-et-vient peut être obtenu par exemple par un piston P déplacé au moyen d'un profil d'une came de commande C₁₀. Un tel piston peut être rigide ou déformable telle une membrane, par exemple. Bien entendu, tout autre moyen apte à déplacer le fluide primaire peut être utilisé. En outre, le déplacement du piston ou similaire peut être commandé par un dispositif de manoeuvre pouvant être une came, un dispositif magnétique, un moteur linéaire ou tout autre moyen équivalent apte à déplacer ledit piston selon un mouvement de va-et-vient.

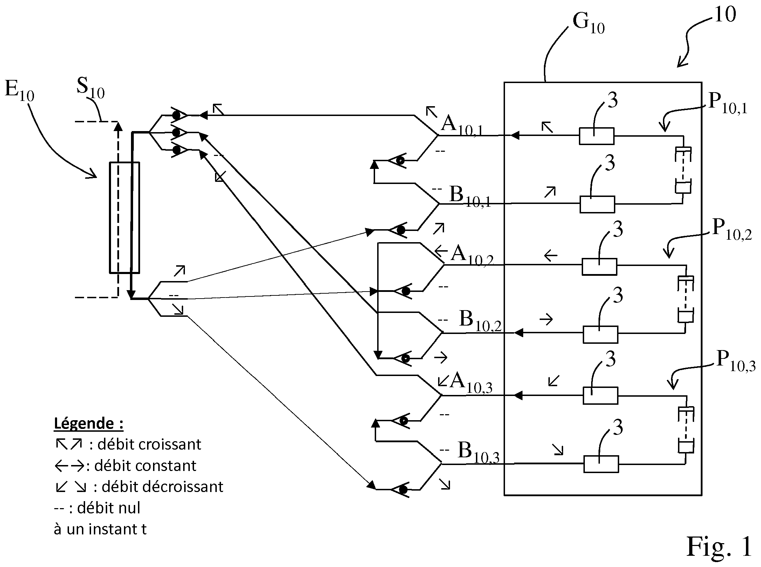

Dans le schéma de la figure 1, ainsi que dans les autres schémas, les circuits primaires P_{10,i}, P_{20,i}, P_{30,i}, P_{40,i} sont représentés très schématiquement. Ils peuvent notamment comporter d'autres éléments non illustrés tels que par exemple des joints, des canaux, des systèmes de diffusion ou de répartition du fluide, etc. De préférence, les circuits primaires P_{10,i}, P_{20,i}, P_{30,i}, P_{40,i} sont fermés et à volume constant.

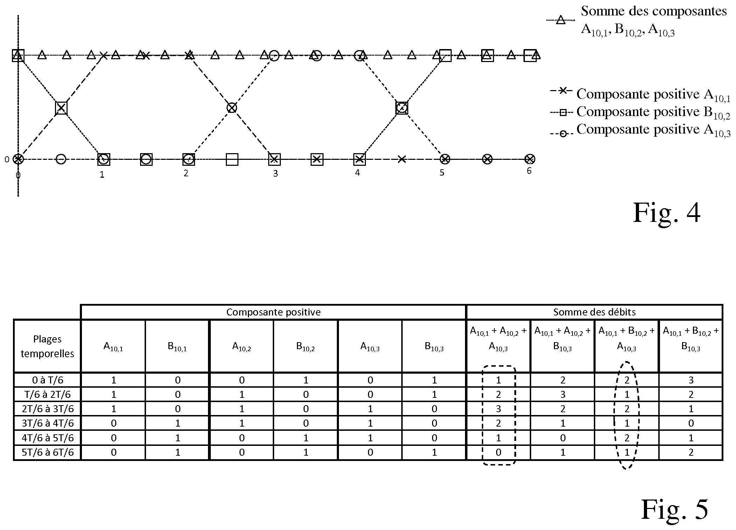

Les flèches des figures annexées illustrent le sens de circulation du fluide primaire et du fluide secondaire dans les appareils thermiques 10, 20, 30, 40 à un instant donné selon le diagramme de la figure 4.

Dans chaque circuit primaire P_{10,i}, P_{20,i}, P_{30,i}, P_{40,i}, le fluide primaire est déplacé selon un même mouvement alternatif de va-et-vient de période T, selon un profil de débit et de volume identique, aux dispersions mécanique près. Ce mouvement alternatif peut éventuellement comporter un ou plusieurs moments d'arrêt pendant lesquels le fluide primaire n'est pas déplacé. Le déplacement du fluide caloporteur s'effectue selon un mouvement identique dans chaque circuit primaire P_{10,i}, P_{20,i}, P_{30,i}, P_{40,i} qui comporte un déplacement dans un sens au cours d'une demi-période T et un déplacement en sens contraire pendant l'autre demi-période T. Bien que le profil de débit du fluide primaire soit identique dans tous les circuits primaires, il est déphasé entre eux d'une période de T/2N, N étant le nombre de circuits primaires. En outre, chaque circuit primaire P_{10,i}, P_{20,i}, P_{30,i}, P_{40,i} comporte au moins deux points de sortie reliés entre eux par au moins une zone d'échange thermique E₁₀, E₂₀, E_{30,1}, E_{30,2}, E_{40,1}, E_{40,2}, E'_{40,1}, E'_{40,2} au niveau desdits points de sortie A_{10,1}, A_{10,2}, A_{10,3}, B_{10,1}, B_{10,2}, B_{10,3} ; A_{20,1}, A_{20,2}, A_{20,3}, B_{20,1}, B_{20,2}, B_{20,3} ; A_{30,1}, A_{30,2}, A_{30,3}, B_{30,1}, B_{30,2}, B_{30,3} ; A_{40,1}, A_{40,2}, A_{40,3}, B_{40,1}, B_{40,2}, B_{40,3} ; A'_{40,1}, A'_{40,2}, A'_{40,3}, B'_{40,1}, B'_{40,2}, B'_{40,3.}. La liaison fluidique entre un point de sortie d'un circuit primaire et l'entrée d'une zone d'échange ou la sortie d'une zone d'échange et un point de sortie d'un circuit primaire est unidirectionnelle. A cet effet, les liaisons fluidiques avec l'entrée d'une zone d'échange comportent un moyen n'autorisant le passage du fluide que du point de sortie correspondant du circuit primaire vers l'entrée correspondante, et que les liaisons fluidiques avec la sortie d'une zone d'échange comportent un moyen n'autorisant le passage du fluide que de la sortie de la zone d'échange vers un point de sortie correspondant du circuit primaire. Un tel moyen contrôlant le sens de circulation du fluide primaire peut être constitué par exemple d'un clapet anti-retour ou similaire.

Le déplacement du fluide primaire est réalisé selon un mouvement de va-et-vient sur une période T, de sorte que le fluide primaire issu d'un circuit primaire P_{10,i}, P_{20,i}, P_{30,i}, P_{40,i} n'est susceptible d'être dirigé vers une zone d'échange E₁₀, E₂₀, E_{30,1}, E_{30,2}, E_{40,1}, E_{40,2}, E'_{40,1}, E'_{40,2} que sur une demi-période T/2, celle au cours de laquelle la composante sortante du profil de débit du fluide primaire au point de sortie correspondant est positive et à condition que la liaison fluidique avec la zone d'échange soit possible dans ce sens. La présence d'un clapet anti-retour ou tout autre moyen permettant de ne laisser passer du fluide dans une conduite que lorsqu'il se déplace dans un sens prédéfini, permet de rendre possible ou impossible la liaison fluidique avec une zone d'échange correspondante. Les composantes du profil de débit du fluide primaire sortant des points de sortie reliés entre eux par une zone d'échange sont donc déphasées de T/2N.

La composante du débit de fluide primaire sortant d'un point de sortie est ainsi nulle durant l'une des deux phases de déplacement du fluide primaire et est déphasée de T/2 par rapport à la composante du débit de fluide primaire sortant de l'autre point de sortie auquel il est relié par une zone d'échange.

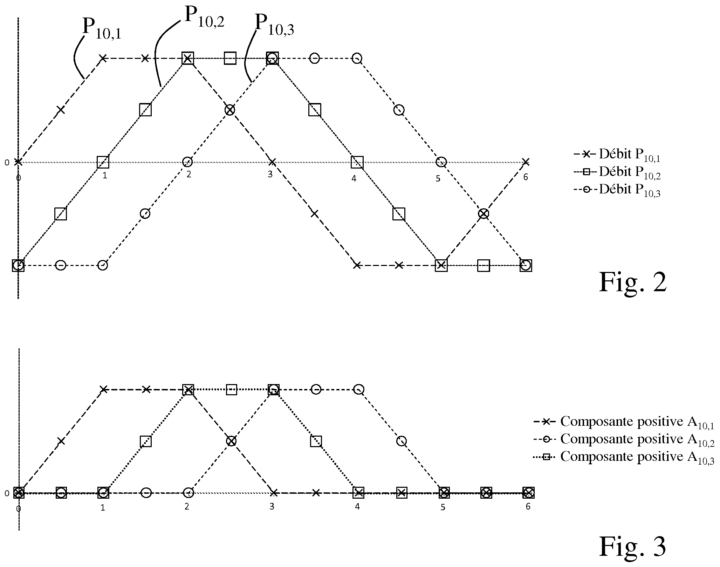

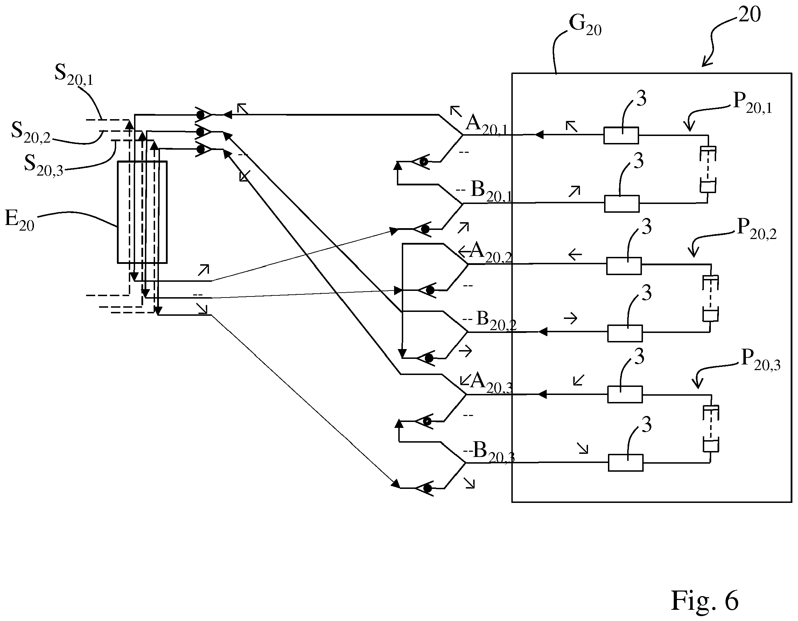

Comme déjà indiqué, les circuits primaires P_{10,i}, P_{20,i}, P_{30,i}, P_{40,i} d'un appareil thermique 10, 20, 30, 40 selon l'invention présentent un déphasage de T/2N entre eux pour ce qui concerne le déplacement ou l'entraînement du fluide primaire. Cela est particulièrement visible à la figure 2 représentant le débit de fluide primaire dans chaque circuit primaire P_{10,1}, P_{10,2}, P_{10,3} sur une période T correspondant à 6 secondes dans un appareil thermique comportant trois circuits primaires P_{10,1}, P_{10,2}, P_{10, 3}, tel que celui illustré schématiquement dans la figure 1. Les appareils thermiques 20, 30, 40 des figures 6, 7 et 8 comportent le même profil de débit. Le débit représenté est celui correspondant à la composante de sortie aux points de sortie A_{10,1}, A_{10,2} et A_{10,3}. A ces points de sortie, le déphasage fluidique entre chaque circuit primaire P_{10,1}, P_{10,2}, P_{10,3} correspond donc à T/2N = 6/(2×3) et est égal à 1 seconde.

La figure 3 représente la composante sortante positive à ces points de sortie A_{10,1}, A_{10,2} et A_{10,3} sur la période T. L'on constate que sur une période T, il n'y a pas constamment de fluide sortant desdits points de sortie A_{10,1}, A_{10,2} et A_{10,3}. Or, cela équivaut à une durée au cours de laquelle il n'y a pas de mouvement de fluide primaire dans la zone d'échange, ce qui est néfaste pour l'échange thermique entre le fluide primaire et le fluide secondaire.

Cette durée au cours de laquelle il n'y a pas de déplacement de fluide primaire dans la zone d'échange est également identifiable dans le tableau de la figure 5. Ce dernier représente les composantes positives de débit issues des points de sortie A_{10,1}, A_{10,2}, A_{10,3}, B_{10,1}, B_{10,2}, B_{10,3} ainsi que leur somme au cours de la période T. La valeur 1 correspond à la présence d'un débit positif, c'est-à-dire que du fluide primaire sort du point de sortie correspondant vers la zone d'échange. La valeur 0 correspond à l'absence d'un débit positif, c'est-à-dire qu'il n'y a pas de fluide primaire sortant du point de sortie et se dirigeant vers la zone d'échange, car le fluide primaire se dirige dans l'autre sens. Ainsi, le profil de débit sortant des points de sortie A_{10,1}, A_{10,2} et A_{10,3} est identifié par les valeurs entourées par un rectangle à coins arrondis et est nul pendant la dernière seconde de la période. Cela a pour effet de déstabiliser l'échange thermique dans la zone thermique et d'augmenter l'influence de la température ambiante sur cet échange, entraînant de ce fait des pertes thermiques.

L'invention permet d'éviter un tel effet néfaste en sélectionnant les points de sortie à relier à l'entrée et la sortie de la ou des zones d'échange de sorte que le débit du fluide primaire dans ladite zone d'échange soit le plus constant possible, et dans tous les cas, jamais nul.

L'invention prévoit ainsi de relier à l'entrée de la zone d'échange E₁₀, E₂₀, E₃₀, E₄₀, E'₄₀ les points de sortie déphasés d'une période de T/N, c'est-à-dire déphasés de 6/3= 2 secondes dans l'exemple décrit en référence aux figures 1 et 2. A cet effet, la figure 4 représente la composante sortante positive aux points de sortie A_{10,1}, B_{10,2} et A_{10,3} sur la période T, correspondant au schéma de l'appareil représenté à la figure 1. L'on constate qu'il y a toujours du fluide primaire sortant d'au moins un desdits points de sortie A_{10,1}, B_{10,2} et A_{10,3} sur une période de 6 secondes. De ce fait, il y a toujours du fluide primaire en mouvement dans la zone d'échange E₁₀ ce qui permet de réaliser un échange thermique quasi-permanent dans la zone d'échange E₁₀. Cela ressort des valeurs de débit entourées par une ellipse dans le tableau illustré dans la figure 5 qui sont constamment positives et non nulles, égales à 1 ou 2. Bien entendu, cela est le cas pour l'ensemble des appareils thermiques décrits dans la présente demande.

En outre, la forme ou le profil de débit du fluide primaire illustré dans la figure 2, en relation avec le raccordement particulier des différents circuits primaires avec les zones d'échange est particulièrement avantageuse car elle permet d'obtenir un débit constant dans lesdites zones d'échange, ce qui favorise l'échange thermique entre les circuits primaires et le circuit secondaire dans lesdites zones d'échange. Cette forme de débit est la suivante :
i) un débit croissant sur une durée de T/2N = 6/(2×3) = 1 seconde, puis
ii) un débit constant sur une durée de (N-2)T/2N = (3-2)×6/(2×3) = 1 seconde,
iii) puis un débit décroissant sur une durée de T/2N = 6/(2×3) = 1 seconde, puis
iv) un débit négatif linéairement décroissant sur une durée correspondant à T/2N = 1 seconde, puis
v) un débit négatif constant sur une durée correspondant à (N-2)T/2N = 1 seconde,
vi) enfin un débit négatif linéairement croissant sur une durée correspondant à T/2N = 1 seconde.

Par débit négatif au sens de la présente invention, il faut comprendre qu'à un point de sortie considéré, le fluide sortant de ce point de sortie se dirige dans la direction opposée à la zone d'échange auquel ledit point de liaison est relié. De ce fait, le débit est positif quand le fluide primaire se déplace du point de sortie vers la zone d'échange.

Dans une telle configuration, avec trois circuits primaires et une même valeur absolue pour la pente du profil de débit croissant et pour la pente du profil du débit décroissant, la somme des débits de fluide primaire entrant dans une zone d'échange est constante et ce débit total correspond au débit maximum dans les circuits primaires dans un appareil comportant trois circuits primaires. Cela ressort de la courbe de la somme des composantes des débits des points de sortie A_{10,1}, B_{10,2}, A_{10,3} qui est horizontale, c'est-à-dire constante sur la figure 4.

L'expérience a montré que ce débit total correspond au double du débit maximal dans un appareil thermique comportant cinq circuits primaires et au triple du débit maximal dans un appareil comportant sept circuits primaires, tout en étant constamment constant, et donc conçu pour un échange optimal dans la zone d'échange correspondante.

Bien entendu, d'autres profils de débit peuvent être réalisés dans les circuits primaires. Ces autres profils, associés à la configuration particulière selon l'invention, permettront d'obtenir constamment un déplacement de fluide dans les zones d'échanges. En d'autres termes, il y aura toujours du fluide primaire qui se déplace dans la zone d'échange sans arrêt, ni zone morte. Cela est important pour assurer un bon échange thermique entre le fluide primaire de l'appareil thermique et le fluide secondaire d'une application extérieure.

L'appareil thermique 10 représenté à la figure 1 correspond à une première variante de réalisation où l'appareil thermique 10 comporte une zone d'échange E₁₀ dans laquelle le fluide secondaire du circuit secondaire S₁₀ échange thermiquement avec le fluide primaire. A cet effet, dans la zone d'échange E₁₀, le fluide primaire provenant des circuits primaires est réuni dans un unique conduit ou canal dans la zone d'échange E₁₀. Dans cette configuration, il n'y a pas de fluide primaire stagnant dans la zone d'échange E₁₀.

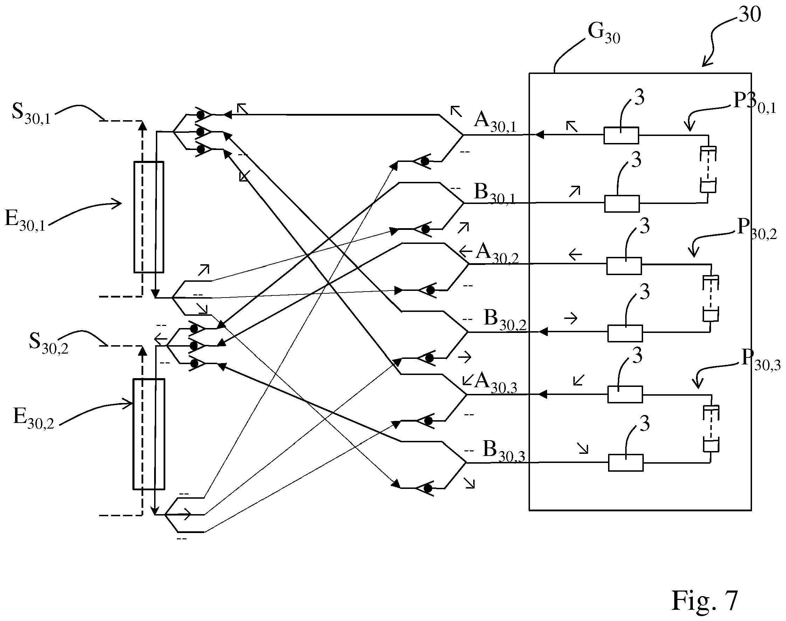

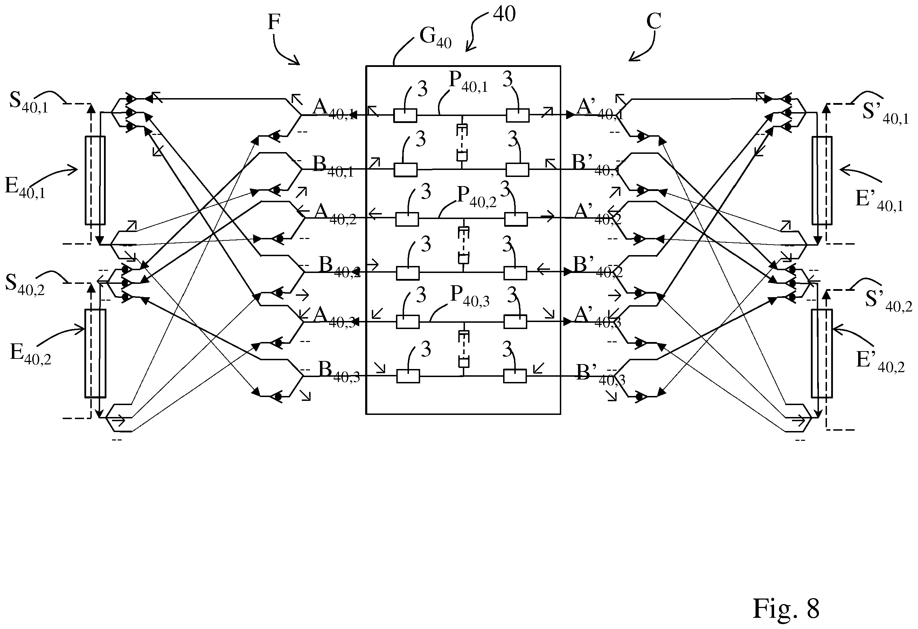

De préférence, la circulation du fluide primaire et celle du fluide secondaire sont réalisées à contre-courant, afin de favoriser l'échange thermique entre eux. Dans la configuration représentée à la figure 1, l'échange thermique n'est réalisé que sur une demi-période T/2 de chaque circuit primaire. Il est, bien entendu possible de réaliser un échange thermique sur toute la période T. Cela est notamment illustré dans l'exemple des figures 7 et 8.

L'appareil thermique 20 représenté à la figure 6 est une autre variante de réalisation qui se démarque de l'appareil thermique 10 de la figure 1 par la configuration de l'échange thermique entre les circuits primaires P_{20,1}, P_{20,1}, P_{20,3} et le circuit secondaire S_{20,1}, S_{20,2}, S_{20,3} dans la zone d'échange E₂₀. En effet, dans cet appareil thermique 20, le fluide de chaque circuit primaire P_{20,1}, P_{20,2}, P_{20,3} entre dans un conduit distinct et dédié dans la zone d'échange E₂₀ et échange thermiquement avec une portion correspondante S_{20,1}, S_{20,2}, S_{20,3} d'un circuit secondaire, formant des paires d'échange thermique. Une telle configuration avec une séparation des circuits primaires dans la zone d'échange E₂₀ permet de simplifier ou d'alléger la connexion hydraulique car elle a notamment besoin de moins de dispositifs contrôlant le sens de circulation du fluide caloporteur. Bien que le débit du fluide primaire soit nul pendant une demi-période dans chaque portion de circuit primaire à l'intérieur de la zone d'échange, il y a constamment au moins une des portions de circuit primaire dans la zone d'échange qui présente un débit non nul, de sorte que le gain thermique est assuré grâce à la conductivité thermique entre les différentes paires de portions de circuit primaire et de circuit secondaire. Il est de ce fait important dans une telle configuration de ne pas isoler thermiquement entre elles les différentes paires d'échange thermique.

L'appareil thermique 30 illustré à la figure 7 est une autre variante de réalisation qui permet de réaliser un échange thermique avec un circuit secondaire sur l'ensemble de la période T. Pour ce faire, il comporte deux zones d'échange E_{30,1} et E_{30,2}. L'entrée de la première zone d'échange E_{30,1} est reliée au premier groupe de points de sortie A_{30,1}, B_{30,2}, A_{30,3} et sa sortie au second groupe de points de sorties B_{30,1}, A_{30,2}, B_{30,3}. L'entrée de la seconde zone d'échange E_{30,2} est, quant à elle, reliée au second groupe de points de sorties B_{30,1}, A_{30,2}, B_{30,3} et sa sortie est reliée au premier groupe de points de sortie A_{30,1}, B_{30,2}, A_{30,3}. De cette manière, toutes les composantes positives du débit de fluide primaire sortant des différents points de sortie A_{30,1}, B_{30,2}, A_{30,3}, B_{30,1}, A_{30,2}, B_{30,3} sont exploitées pour réaliser un échange thermique avec un fluide secondaire. Dans l'appareil thermique 30 illustré dans cet exemple, le fluide issu des différents circuits primaires P_{30,1}, P_{30,2}, P_{30,3} est rassemblé dans un conduit commun dans chacune des zones d'échange E_{30,1}, E_{30,2}. L'invention n'exclut toutefois pas une variante dans laquelle le fluide primaire issu de chaque circuit primaire P_{30,1}, P_{30,2}, P_{30,3} circule dans un conduit séparé dans la zone d'échange, comme cela est le cas dans l'appareil thermique 20 de la figure 6. Une configuration avec deux zones d'échange E_{30,1} et E_{30,2} permet de réaliser un échange thermique symétrique dans les circuits primaires et tout au long du cycle de déplacement du fluide primaire.

Les zones d'échange E₁₀, E₂₀, E_{30,1}, E_{30,2}, E_{40,1}, E_{40,2}, E'_{40,1}, E'_{40,2} dans lesquelles les fluides primaire et secondaire s'écoulent de préférence longitudinalement l'un par rapport à l'autre peuvent être formées par un échangeur thermique dont les circuits d'échange intègrent une partie du circuit secondaire S₁₀, S_{20,1}, S_{20,2}, S_{20,3}, S_{30,1}, S_{30,2}, S_{40,1}, S_{40,2}, S'_{40,1}, S'_{40,2} dans lequel circule un fluide secondaire et la ou les conduits ou portions de circuit primaire unidirectionnel. L'invention ne préjuge pas de la configuration structurelle de ces échangeurs thermiques qui peuvent être des échangeurs à plaques, tubulaires ou tout autre type d'échangeurs thermiques.

L'invention ne préjuge pas de la manière dont est obtenue l'énergie thermique dans le coeur des appareils thermiques 10, 20, 30, 40. Toutefois, l'invention est particulièrement adaptée aux appareils thermiques magnétocaloriques dans lesquels l'énergie thermique est obtenue dans le coeur de l'appareil thermique par l'exploitation de l'effet magnétocalorique de matériaux dits à effet magnétocalorique. A cet effet, les composants identifiés par la référence 3 dans les appareils décrits dans la présente invention peuvent être des éléments magnétocaloriques. Ces éléments magnétocaloriques 3 sont représentés schématiquement et traversés de part en part par le fluide primaire des circuits primaires P_{10,i}, P_{20,i}, P_{30,i}, P_{40,i}.

Chaque élément magnétocalorique 3 peut être constitué par un ou plusieurs matériaux magnétocaloriques aptes à être traversés par le fluide primaire. A cet effet, lesdits matériaux magnétocaloriques peuvent être poreux de sorte que leurs pores forment des passages de fluide débouchants. Ils peuvent également se présenter sous la forme d'un bloc plein dans lequel des mini ou micro-canaux sont usinés, moulés ou extrudés ou encore être constitués par un assemblage de plaques, éventuellement rainurées, superposées et entre lesquelles le fluide caloporteur peut s'écouler. Ils peuvent aussi se présenter sous la forme de poudre ou de particules de sorte que les interstices forment des passages de fluide. Toute autre forme de réalisation permettant au fluide primaire d'échanger thermiquement avec chaque élément magnétocalorique 3 peut, bien entendu, convenir. Une configuration particulière peut ainsi comporter un élément magnétocalorique sous forme d'une lame qui n'est pas traversée par le fluide primaire mais qui est en contact thermique avec ledit fluide primaire circulant, par exemple, sur les surfaces supérieure et inférieure de cette lame dans deux sens opposés, pour déboucher à chaque fois au niveau d'une des extrémités de ladite lame formant les extrémités du module thermique comportant cette lame. Dans une configuration d'appareil thermique rotatif, l'élément thermique peut se présenter sous la forme d'un disque contenant le matériau magnétocalorique par exemple en forme de lames empilées et espacées pour former entre elles des canaux de passage du fluide primaire.

Dans ce type d'appareil thermique, il est prévu un arrangement magnétique comportant des aimants permanents ou similaires, qui est déplacé par rapport aux éléments magnétocaloriques 3 pour les soumettre alternativement à une variation de champ magnétique et créer alternativement dans les éléments magnétocaloriques 3, une phase d'échauffement et une phase de refroidissement. Cet arrangement magnétique peut également se présenter sous la forme d'un électroaimant alimenté séquentiellement ou par tout autre moyen analogue susceptible de créer une variation de champ magnétique. Les inversions de sens de circulation du fluide primaire dans le circuit primaire P_{10,i}, P_{20,i}, P_{30,i}, P_{40,i} sont, dans ce cas, synchronisées avec les phases de magnétisation et démagnétisation des éléments magnétocaloriques 3 de manière à établir un gradient de température le plus élevé possible au sein des éléments magnétocaloriques 3. Cette synchronisation peut être telle que celle décrite dans la demande de brevet de la demanderesse publiée sous le numéro WO 2010/046559.

Bien entendu, l'appareil thermique magnétocalorique peut comprendre un nombre d'éléments magnétocaloriques 3 différent de ce qui est représenté dans les figures annexées.

La figure 8 représente une variante préférée d'un appareil thermique 40 magnétocalorique selon l'invention. L'appareil thermique comporte trois circuits primaires P_{40,1}, P_{40,2}, P_{40,3}. Le profil du débit de fluide primaire dans ces circuits primaires P_{40,1}, P_{40,2}, P_{40,3} est tel que celui décrit en référence à la figure 2. Chaque circuit primaire P_{40,1}, P_{40,2}, P_{40,3} comporte quatre points de sortie reliés deux-à-deux par au moins une zone d'échange thermique E_{40,1}, E_{40,2}, E'_{40,1}, E'_{40,2}. Ainsi, il y a un échange thermique des deux côtés du coeur G₄₀ de l'appareil thermique 40, c'est-à-dire au niveau du côté chaud C situé à droite sur la figure 8 et correspondant aux zones d'échange E'_{40,1} et E'_{40,2} et au niveau du côté froid F situé à gauche sur la figure 8 et correspondant aux zones d'échange E_{40,1} et E_{40,2}. En outre, la configuration représentée permet de réaliser un échange continu sur l'ensemble de la période T de déplacement du fluide primaire car chaque circuit primaire P_{40,1}, P_{40,2}, P_{40,3} est relié à deux zones d'échange S_{40,1}, S_{40,2} et S'_{40,1}, S'_{40,2}.

Ainsi, l'entrée de la zone d'échange thermique E_{40,1} située du côté froid F est reliée à un premier ensemble de points de sortie A_{40,1}, B_{40,2}, A_{40,3} pour lesquels la composante du débit de fluide primaire est à chaque fois déphasée de T/N, c'est-à-dire 6/3 qui est égal à 2 secondes pour cet exemple. La sortie de cette zone d'échange thermique E_{40,1} est reliée à un second ensemble de points de sortie B_{40,1}, A_{40,2}, B_{40,3} pour lesquels la composante du débit de fluide primaire est également à chaque fois déphasée de 2 secondes et d'une demi-période T/2 par rapport au premier ensemble de points de sortie. La deuxième zone d'échange E_{40,2} située du côté froid F est reliée aux mêmes points de sortie A_{40,1}, B_{40,2}, A_{40,3}, B_{40,1}, A_{40,2}, B_{40,3} que la zone d'échange E_{40,1}, mais de manière inversée. Ainsi, l'entrée de la zone d'échange E_{40,2} est reliée au second ensemble comportant les points de sortie B_{40,1}, A_{40,2}, B_{40,3} et sa sortie est reliée au premier ensemble comportant les points de sortie A_{40,1}, B_{40,2}, A_{40,3}. Il en est de même des deux zones d'échange thermique E'_{40,1} et E'_{40,2} situées du côté chaud C respectivement reliées à un premier ensemble de points de sortie A'_{40,1}, B'_{40,2}, A'_{40,3} et à un second ensemble de points de sortie B'_{40,1}, A'_{40,2}, B'_{40,3}.

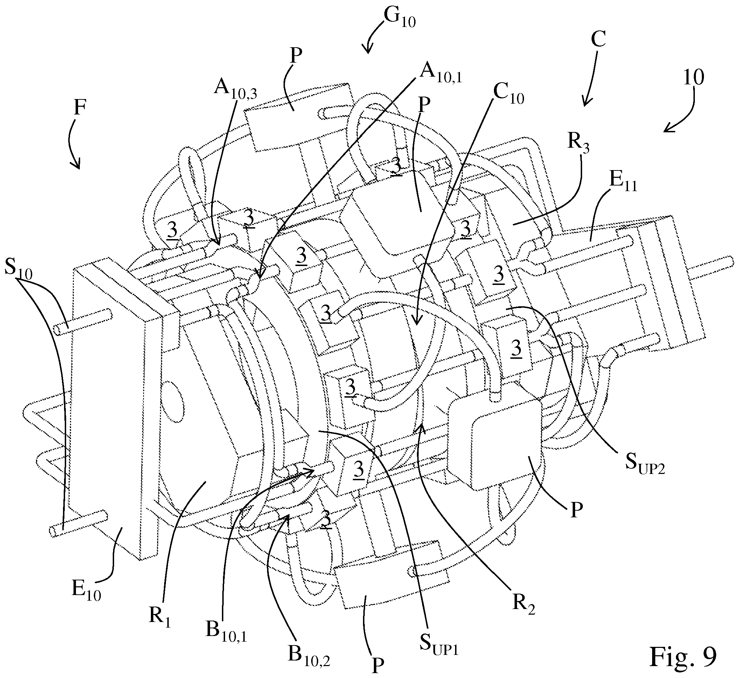

La figure 9 est une vue en perspective de l'appareil thermique 10 magnétocalorique décrit en relation avec la figure 1. Il comporte un arrangement magnétique avec trois rotors magnétiques R₁, R₂, R₃ qui, par leur rotation autour de l'axe longitudinal de l'appareil thermique 10, soumettent des éléments magnétocaloriques 3 à une variation de champ magnétique. Les rotors magnétiques R₁, R₂, R₃ comportent chacun une armature sur laquelle sont montés des aimants permanents. Les éléments magnétocaloriques 3 sont montés dans deux supports fixes S_{UP1}, S_{UP2}. Le fluide primaire est déplacé par des actionneurs réalisés par des pistons P actionnés par une came de commande C₁₀ dont le profil de came est réalisé sur le rotor R₂.

L'appareil représenté dans la figure 9 est symétrique par rapport au rotor R₂ et comporte au niveau de son côté froid F un échangeur thermique matérialisant la zone d'échange E₁₀ dans laquelle le fluide secondaire du circuit secondaire S₁₀ échange thermiquement avec le fluide primaire. Le côté chaud C de l'appareil thermique 10 est situé à droite sur la figure 9 et comporte également une zone d'échange E₁₁.

### Possibilités d'application industrielle:

Il ressort clairement de cette description que l'invention permet d'atteindre les buts fixés, à savoir proposer un appareil thermique 10, 20, 30, 40 susceptible d'améliorer l'échange thermique dans un échangeur thermique relié à un appareil dont le fluide primaire se déplace selon un mouvement bidirectionnel alterné.

L'appareil thermique 10, 20, 30, 40 selon l'invention peut trouver une application aussi bien industrielle que domestique dans le domaine du chauffage, de la climatisation, du tempérage, refroidissement ou autres, et ce, à des coûts compétitifs et dans un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Appareil thermique (10, 20, 30, 40) comportant un nombre impair de N circuits primaires (P_{10,i}, P_{20,i}, P_{30,i}, P_{40,i}, N ≥ 3, i ∈ [1,N]) fermés, comportant chacun au moins deux points de sortie (A_{10,i}, A_{20,i}, A_{30,i}, A_{40,i}, B_{10,i}, B_{20,i}, B_{30,i}, B_{40,i}) reliés en série à au moins une zone d'échange thermique (E₁₀, E₂₀, E_{30,1}, E_{30,2}, E_{40,1}, E_{40,2}, E'_{40,1}, E'_{40,2}) dans laquelle circule un fluide secondaire, un dispositif de manoeuvre déplaçant un fluide caloporteur appelé fluide primaire dans lesdits circuits primaires (P_{10,i}, P_{20,i}, P_{30,i}, P_{40,i}) selon un cycle alternatif de période T comportant deux phases de déplacement d'une demi-période T/2, lesdites phases correspondant à deux déplacements du fluide primaire engendrant un profil de débit et de volume identiques mais de sens opposés, appareil thermique **caractérisé en ce que** le dispositif de manoeuvre est agencé pour que le début du cycle du fluide primaire est déphasé de T/2N entre chacun desdits circuits primaires (P_{10,i}, P_{20,i}, P_{30,i}, P_{40,i}), **en ce que** l'entrée de ladite zone d'échange est reliée de manière unidirectionnelle à un premier ensemble comportant un premier groupe de points de sortie desdits circuits primaires dont les composantes du débit de fluide primaire sortant sont déphasées entre elles de T/N et **en ce que** la sortie de la zone d'échange est reliée de manière unidirectionnelle à un second ensemble comportant un second groupe de points de sortie desdits circuits primaires dont les composantes du débit de fluide primaire sortant sont également déphasées entre elles de T/N et sont déphasées de T/2 par rapport aux composantes du débit de fluide primaire sortant des points de sortie dudit premier ensemble, de sorte que la somme des débits de fluide caloporteur du premier ensemble entrant dans ladite zone d'échange est toujours supérieure à zéro.

2. Appareil thermique, selon la revendication 1, **caractérisé en ce qu'**il comporte une zone d'échange dont la sortie est reliée de manière unidirectionnelle aux points de sortie du premier ensemble et dont l'entrée est reliée de manière unidirectionnelle aux points de sortie du second ensemble.

3. Appareil thermique, selon l'une quelconque des revendications précédentes, **caractérisé en ce que** lesdits circuits primaires se rejoignent dans un conduit commun dans ladite zone d'échange.

4. Appareil thermique, selon l'une quelconque des revendications 1 à 2, **caractérisé en ce que** lesdits circuits primaires sont reliés à des conduits distincts dans ladite zone d'échange.

5. Appareil thermique, selon l'une quelconque des revendications précédentes, **caractérisé en ce que** ladite zone d'échange est agencée pour que le fluide primaire et le fluide secondaire se déplacent à contre-courant l'un par rapport à l'autre.

6. Appareil thermique, selon l'une quelconque des revendications précédentes, **caractérisé en ce que** le fluide primaire se déplace dans lesdits circuits primaires (P_{10,i}, P_{20,i}, P_{30,i}, P_{40,i}) successivement selon :
i) un débit positif linéairement croissant sur une durée correspondant à T/2N,
ii) puis un débit positif constant sur une durée correspondant à (N-2)T/2N,
iii) puis un débit positif linéairement décroissant sur une durée correspondant à T/2N,
iv) puis un débit négatif linéairement décroissant sur une durée correspondant à T/2N,
v) puis un débit négatif constant sur une durée correspondant à (N-2)T/2N,
vi) puis un débit négatif linéairement croissant sur une durée correspondant à T/2N.

7. Appareil thermique, selon l'une quelconque des revendications précédentes, **caractérisé en ce que** lesdits circuits primaires (P_{10,i}, P_{20,i}, P_{30,i}, P_{40,i}) comportent chacun quatre points de sortie (A_{10,i}, A_{20,i}, A_{30,i}, A_{40,i}, B_{10,i}, B_{20,i}, B_{30,i}, B_{40,i}) reliés deux-à-deux par au moins deux zones d'échange (E_{40,1}, E_{40,2}, E'_{40,1}, E'_{40,2}).

8. Appareil thermique, selon l'une quelconque des revendications précédentes, **caractérisé en ce que** le dispositif de manoeuvre du fluide primaire dans les circuits primaires comporte au moins une came de commande (C₁₀) déplaçant des pistons et **en ce que** la came de commande comporte un profil agencé pour déterminer dans chaque circuit primaire un déplacement du fluide primaire selon un mouvement alternatif périodique de période T.

9. Appareil thermique, selon l'une quelconque des revendications précédentes, **caractérisé en ce que** chaque circuit primaire comporte au moins un élément magnétocalorique (3) traversé de part en part par ledit fluide primaire, et **en ce que** ledit appareil comporte un arrangement magnétique (R₁, R₂, R₃) agencé pour soumettre alternativement ledit élément magnétocalorique (3) à une variation de champ magnétique et créer alternativement dans ledit élément magnétocalorique (3), une phase d'échauffement et une phase de refroidissement.

10. Procédé d'optimisation de l'échange thermique d'un appareil thermique (10, 20, 30, 40) comportant un nombre impair de N circuits primaires (P_{10,i}, P_{20,i}, P_{30,i}, P_{40,i}, N ≥ 3, i ∈ [1,N]) fermés, comportant chacun au moins deux points de sortie (A_{10,i}, A_{20,i}, A_{30,i}, A_{40,i}, B_{10,i}, B_{20,i}, B_{30,i}, B_{40,i}) reliés en série à au moins une zone d'échange thermique (E₁₀, E₂₀, E_{30,1}, E_{30,2}, E_{40,1}, E_{40,2}, E'_{40,1}, E'_{40,2}) dans laquelle circule un fluide secondaire,
procédé consistant à déplacer un fluide caloporteur appelé fluide primaire dans lesdits circuits primaires (P_{10,i}, P_{20,i}, P_{30,i}, P_{40,i}) selon un cycle alternatif de période T comportant deux phases de déplacement d'une demi-période T/2, lesdites phases correspondant à deux déplacements du fluide primaire engendrant un profil de débit et de volume identiques mais de sens opposés,
**caractérisé en ce qu'**il consiste en outre à déphaser de T/2N le début du cycle du fluide primaire entre chacun desdits circuits primaires (P_{10,i}, P_{20,i}, P_{30,i}, P_{40,i}), à relier de manière unidirectionnelle l'entrée de ladite zone d'échange à un premier ensemble comportant un premier groupe de points de sortie desdits circuits primaires dont les composantes du débit de fluide primaire sortant sont déphasées entre elles de T/N et à relier de manière unidirectionnelle la sortie de la zone d'échange à un second ensemble comportant un second groupe de points de sortie desdits circuits primaires dont les composantes du débit de fluide primaire sortant sont également déphasées entre elles de T/N et sont déphasées de T/2 par rapport aux composantes du débit de fluide primaire sortant des points de sortie dudit premier ensemble, de sorte que la somme des débits de fluide caloporteur du premier ensemble entrant dans ladite zone d'échange est toujours supérieure à zéro.

11. Procédé, selon la revendication 10, **caractérisé en ce qu'**il consiste à optimiser l'échange thermique d'un appareil thermique (10, 20, 30, 40) selon l'une quelconque des revendications 1 à 9.

## Patentansprüche

1. Thermische Vorrichtung (10, 20, 30, 40) mit einer ungeraden Anzahl N geschlossener Primärkreisläufe (P_{10,i}, P_{20,i}, P_{30,i}, P_{40,i}, N ≥ 3, i ∈ [1,N]) mit jeweils zumindest zwei Austrittspunkten (A_{10,i}, A_{20,i}, A_{30,i}, A_{40,i}, B_{10,i}, B_{20,i}, B_{30,i}, B_{40,i}), die mit zumindest einer Wärmeaustauschzone (E₁₀, E₂₀, E_{30,1}, E_{30,2}, E_{40,1}, E_{40,2}, E'_{40,1}, E'_{40,2}) seriell verbunden sind, in welcher ein Sekundärfluid zirkuliert, einer Betätigungsvorrichtung, die ein als Primärfluid bezeichnetes Wärmeübertragungsfluid in besagten Primärkreisläufen (P_{10,i}, P_{20,i}, P_{30,i}, P_{40,i}) in einem hin-und-hergehenden Zyklus mit Periode T bewegt, bestehend aus zwei Bewegungsphasen von jeweils einer halben Periode T/2, wobei besagte Phasen zwei Bewegungen des Primärfluids entsprechen, die identische Durchfluss- und Volumenprofile erzeugen, jedoch in entgegen gesetzte Richtungen, **dadurch gekennzeichnete** thermische Vorrichtung, dass die Betätigungsvorrichtung so ausgelegt ist, dass der Beginn des Zyklus des Primärfluids zwischen jedem der besagten Primärkreisläufen (P_{10,i}, P_{20,i}, P_{30,i}, P_{40,i}) um T/2N phasenverschoben ist, dadurch, dass der Eintritt von besagter Austauschzone auf unidirektionale Weise mit einem ersten Satz bestehend aus einer ersten Gruppe Austrittspunkten von besagten Primärkreisläufen verbunden ist, deren austretende Primärfluid-Durchflusskomponenten untereinander um T/N phasenverschoben sind und dadurch, dass der Austritt der Austauschzone auf unidirektionale Weise mit einem zweiten Satz bestehend aus einer zweiten Gruppe Austrittspunkten von besagten Primärkreisläufen verbunden ist, deren Primärfluid-Durchflusskomponenten untereinander ebenfalls um T/N phasenverschoben sind und um T/2 in Bezug auf die aus den Austrittspunkten des besagten ersten Satzes austretenden Primärfluid-Durchflusskomponenten phasenverschoben sind, so dass die Summe der in besagter Austauschzone eintretenden Wärmeübertragungsfluid-Durchflüsse des ersten Satzes immer größer als Null ist.

2. Thermische Vorrichtung nach Anspruch 1, **dadurch gekennzeichnet, dass** sie eine Austauschzone beträgt, deren Austritt auf unidirektionale Weise mit den Austrittspunkten des ersten Satzes verbunden ist und deren Eintritt auf unidirektionale Weise mit den Austrittspunkten des zweiten Satzes verbunden ist

3. Thermische Vorrichtung nach einem beliebigen der vorhergehenden Ansprüche, **dadurch gekennzeichnet, dass** besagte Primärkreisläufe in einer gemeinsamen Leitung in besagter Austauschzone zusammenfließen.

4. Thermische Vorrichtung nach einem beliebigen der Ansprüche 1 bis 2, **dadurch gekennzeichnet, dass** besagte Primärkreisläufe in besagter Austauschzone mit getrennten Leitungen verbunden sind..

5. Thermische Vorrichtung nach einem beliebigen der vorhergehenden Ansprüche, **dadurch gekennzeichnet, dass** besagte Austauschzone ausgelegt ist, damit Primärfluid und Sekundärfluid gegenläufig zueinander fließen.

6. Thermische Vorrichtung nach einem beliebigen der vorhergehenden Ansprüche, **dadurch gekennzeichnet, dass** das Primärfluid wie folgt in besagten Primärkreisläufen (P_{10,i}, P_{20,i}, P_{30,i}, P_{40,i}) aufeinander folgend fließt:
i) ein linear ansteigender positiver Durchfluss während einer Dauer gleich T/2N,
ii) dann ein konstanter positiver Durchfluss während einer Dauer gleich (N-2)T/2N,
iii) dann ein linear absteigender positiver Durchfluss während einer Dauer gleich T/2N,
iv) dann ein linear absteigender negativer Durchfluss während einer Dauer gleich T/2N,
v) dann ein konstanter negativer Durchfluss während einer Dauer gleich (N-2)T/2N,
vi) dann ein linear ansteigender negativer Durchfluss während einer Dauer gleich T/2N.

7. Thermische Vorrichtung nach einem beliebigen der vorhergehenden Ansprüche, **dadurch gekennzeichnet, dass** besagte Primärkreisläufe (P_{10,i}, P_{20,i}, P_{30,i}, P_{40,i}) jeweils vier Austrittspunkte (A_{10,i}, A_{20,i}, A_{30,i}, A_{40,i}, B_{10,i}, B_{20,i}, B_{30,i}, B_{40,i}) betragen, die paarweise durch zumindest zwei Austauschzonen (E_{40,1}, E_{40,2}, E'_{40,1}, E'_{40,2}) verbunden sind.

8. Thermische Vorrichtung nach einem beliebigen der vorhergehenden Ansprüche, **dadurch gekennzeichnet, dass** die Betätigungsvorrichtung des Primärfluids in den Primärkreisläufen zumindest eine Steuerkurve (C₁₀) beträgt, die Kolben bewegt, und dadurch, dass die Steuerkurve ein Profil aufweist, das ausgelegt ist, um in jedem Primärkreislauf in eine periodisch abwechselnde hin-und-her-Bewegung des Primärfluids zu erzeugen.

9. Thermische Vorrichtung nach einem beliebigen der vorhergehenden Ansprüche, **dadurch gekennzeichnet, dass** jeder Primärkreislauf zumindest ein von besagtem Wärmeübertragungsfluid quer durchflossenes magnetokalorisches Element (3) beträgt, und dadurch, dass besagte Vorrichtung eine Magnetische Anordnung (R₁, R₂, R₃) beträgt, die ausgelegt ist, um besagtes magnetokalorisches Element (3) abwechselnd einer Variation des Magnetfelds auszusetzen und abwechselnd in besagtem magnetokalorischem Element (3) eine Erwärmungsphase und eine Abkühlungsphase zu erzeugen.

10. Verfahren zur Optimierung des Wärmeaustausches einer thermischen Vorrichtung (10, 20, 30, 40) mit einer ungeraden Anzahl N geschlossener Primärkreisläufe (P_{10,i}, P_{20,i}, P_{30,i}, P_{40,i}, N ≥ 3, i ∈ [1,N]) mit jeweils zumindest zwei Austrittspunkten (A_{10,i}, A_{20,i}, A_{30,i}, A_{40,i}, B_{10,i}, B_{20,i}, B_{30,i}, B_{40,i}), die mit zumindest einer Wärmeaustauschzone (E₁₀, E₂₀, E_{30,1}, E_{30,2}, E_{40,1}, E_{40,2}, E'_{40,1}, E'_{40,2}) seriell verbunden sind, in welcher ein Sekundärfluid zirkuliert,
Verfahren, das darin besteht, ein als Primärfluid bezeichnetes Wärmeübertragungsfluid in besagten Primärkreisläufen (P_{10,i}, P_{20,i}, P_{30,i}, P_{40,i}) in einem hin-und-hergehenden Zyklus mit Periode T bestehend aus zwei Bewegungsphasen von jeweils einer halben Periode T/2, wobei besagte Phasen zwei Bewegungen des Primärfluids entsprechen, die identische Durchfluss- und Volumenprofile erzeugen, jedoch in entgegen gesetzte Richtungen, zu bewegen,
**dadurch gekennzeichnet, dass** er außerdem darin besteht, die Phase des Beginns des Zyklus des Primärfluids zwischen jedem der besagten Primärkreisläufe (P_{10,i}, P_{20,i}, P_{30,i}, P_{40,i}) um T/2N zu verschieben, den Eintritt von besagter Austauschzone auf unidirektionale Weise mit einem ersten Satz bestehend aus einer ersten Gruppe Austrittspunkten von besagten Primärkreisläufen zu verbinden, deren austretende Primärfluid-Durchflusskomponenten untereinander um T/N phasenverschoben sind, und den Austritt von besagter Austauschzone auf unidirektionale Weise mit einem zweiten Satz bestehend aus einer zweiten Gruppe Austrittspunkten von besagten Primärkreisläufen zu verbinden, deren austretende Primärfluid-Durchflusskomponenten untereinander ebenfalls um T/N phasenverschoben sind und um T/2 in Bezug auf die aus den Austrittspunkten von besagtem ersten Satz austretenden Primärfluid-Durchflusskomponenten phasenverschoben sind, so dass die Summe der in besagte Austauschzone eintretenden Wärmeübertragungsfluid-Durchflüsse des ersten Satzes immer größer als Null ist.

11. Verfahren nach Anspruch 10, **dadurch gekennzeichnet, dass** es darin besteht, den Wärmeaustausch einer thermischen Vorrichtung (10, 20, 30, 40) nach einem beliebigen der Ansprüche 1 bis 9 zu optimieren.

## Claims

1. Thermal appliance (10, 20, 30, 40) comprising an uneven number of N closed primary circuits (P_{10,i}, P_{20,i}, P_{30,i}, P_{40,i}, N ≥ 3, i ∈ [1,N]) comprising each at least two outlet points (A_{10,i}, A_{20,i}, A_{30,i}, A_{40,i}, B_{10,i}, B_{20,i}, B_{30,i}, B_{40,i}) connected in series to at least one heat exchange zone (E₁₀, E₂₀, E_{30,1}, E_{30,2}, E_{40,1}, E_{40,2}, E'_{40,1}, E'_{40,2}) through which a secondary fluid circulates, an operating device that displaces a heat transfer fluid called primary fluid in said primary circuits (P_{10,i}, P_{20,i}, P_{30,i}, P_{40,i}) in an alternating cycle of period T comprising two displacement phases of a half-period T/2, said phases corresponding to two primary fluid displacements generating identical flow rate and volume profiles but in opposite directions, thermal appliance **characterized in that** the operating device is arranged so that the start of the cycle of the primary fluid is phase-shifted by T/2N between each of said primary circuits (P_{10,i}, P_{20,i}, P_{30,i}, P_{40,i}), **in that** the inlet of said exchange zone is connected unidirectionally to a first set comprising a first group of outlet points of said primary circuits whose exiting primary fluid flow rate components are phase-shifted by T/N with respect to each other and **in that** the outlet of the exchange zone is connected unidirectionally to a second set comprising a second group of outlet points of said primary circuits whose exiting primary fluid flow rate components are also phase-shifted by T/N with respect to each other and phase-shifted by T/2 with respect to the primary fluid flow rate components exiting the outlet points of said first set, so that the sum of the heat transfer fluid flow rates of the first set entering said exchange zone is always greater than zero.

2. Thermal appliance according to claim 1, **characterized in that** it comprises an exchange zone whose outlet is connected unidirectionally to the outlet points of the first set and whose inlet is connected unidirectionally to the outlet points of the second set.

3. Thermal appliance according to any of the previous claims, **characterized in that** said primary circuits join in a common conduit in said exchange zone.

4. Thermal appliance according to any of claims 1 to 2, **characterized in that** said primary circuits are connected to separate conduits in said exchange zone.

5. Thermal appliance according to any of the previous claims, **characterized in that** said exchange zone is arranged so that the primary fluid and the secondary fluid flow countercurrent with respect to each other.

6. Thermal appliance according to any of the previous claims, **characterized in that** the primary fluid is displaced in said primary circuits (P_{10,i}, P_{20,i}, P_{30,i}, P_{40,i}) successively according to:
i) a linearly increasing positive flow rate for a duration corresponding to T/2N,
ii) then a constant positive flow rate for a duration corresponding to (N-2)T/2N,
iii) then a linearly decreasing positive flow rate for a duration corresponding to T/2N,
iv) then a linearly decreasing negative flow rate for a duration corresponding to T/2N,
v) then a constant negative flow rate for a duration corresponding to (N-2)T/2N,
vi) then a linearly increasing negative flow rate for a duration corresponding to T/2N.

7. Thermal appliance according to any of the previous claims, **characterized in that** said primary circuits (P_{10,i}, P_{20,i}, P_{30,i}, P_{40,i}) comprise each four outlet points (A_{10,i}, A_{20,i}, A_{30,i}, A_{40,i}, B_{10,i}, B_{20,i}, B_{30,i}, B_{40,i}) connected two by two by at least two exchange zones (E_{40,1}, E40,2, E'40,1, E'40,2).

8. Thermal appliance according to any of the previous claims, **characterized in that** the operating device of the primary fluid in the primary circuits comprises at least one control cam (C₁₀) moving pistons and **in that** the control cam comprises a profile arranged so as to determine in each primary circuit a displacement of the primary fluid according to a periodic reciprocating movement of period T.

9. Thermal appliance according to any of the previous claims, **characterized in that** each primary circuit comprises at least one magnetocaloric element (3) through which passes said primary fluid, and **in that** said appliance comprises a magnetic arrangement (R₁, R₂, R₃) arranged to subject alternately said magnetocaloric element (3) to a magnetic field variation and create alternately in said magnetocaloric element (3) a heating phase and a cooling phase.

10. Method for optimizing the heat exchange of a thermal appliance (10, 20, 30, 40) comprising an uneven number of N closed primary circuits (P_{10,i}, P_{20,i}, P_{30,i}, P_{40,i}, N ≥ 3, i ∈ [1,N]) comprising each at least two outlet points (A_{10,i}, A_{20,i}, A_{30,i}, A_{40,i}, B_{10,i}, B_{20,i}, B_{30,i}, B_{40,i}) connected in series to at least one heat exchange zone (E₁₀, E₂₀, E_{30,1}, E_{30,2}, E_{40,1}, E_{40,2}, E'_{40,1}, E'_{40,2}) through which a secondary fluid circulates,
method consisting in displacing a heat transfer fluid called primary fluid in said primary circuits (P_{10,i}, P_{20,i}, P_{30,i}, P_{40,i}) in an alternating cycle of period T comprising two displacement phases of a half-period T/2, said phases corresponding to two primary fluid displacements generating identical flow rate and volume profiles but in opposite directions,
**characterized in that** it moreover consists in phase-shifting by T/2N the start of the primary fluid cycle between each of said primary circuits (P_{10,i}, P_{20,i}, P_{30,i}, P_{40,i}), in connecting unidirectionally the inlet of said exchange zone to a first set comprising a first group of outlet points of said primary circuits whose exiting primary fluid flow rate components are phase-shifted by T/N with respect to each other and in connecting unidirectionally the outlet of the exchange zone to a second set comprising a second group of outlet points of said primary circuits whose exiting primary fluid flow rate components are also phase-shifted by T/N with respect to each other and phase-shifted by T/2 with respect to the primary fluid flow rate components exiting the outlet points of said first set, so that the sum of the heat transfer fluid flow rates of the first set entering said exchange zone is always greater than zero.

11. Method according to claim 10, **characterized in that** it consists in optimizing the heat exchange of a thermal appliance (10, 20, 30, 40) according to any of claims 1 to 9.
